# EUROPEAN PATENT SPECIFICATION

(11) **EP 1 561 540 B1**
(45) Date of publication and mention of the grant of the patent: **09.04.2008**
(21) Application number: 05002236.7
(22) Date of filing: 03.02.2005
(51) Int. Cl.: B24B 37/04

(54) **Flexible membrane for a polishing head and CMP apparatus having the same**
Elastische Membran für einen Polierkopf sowie CMP-Vorrichtung, die diesen enthält
Membrane flexible pour une tête de polissage et dispositif CMP contenant le même

(30) Priority: 09.02.2004 KR 2004008267
(43) Date of publication of application: 10.08.2005
(73) Proprietor: SAMSUNG ELECTRONICS CO., LTD., Suwon-si, Gyeonggi-do (KR)
(72) Inventor: Park, Moo-Yong, Giheung-eup Yongin-si Gyeonggi-do (KR); Koo, Ja-Eung, Goyang-si Gyeonggi-do (KR); Han, Sang-Cheol, 200 Noyou 2-dong Gwangjin-gu Seoul (KR); Hong, Duk-Ho, Dukyang-gu Goyang-si Gyeonggi-do (KR)
(74) Representative: Patentanwälte Ruff, Wilhelm, Beier, Dauster & Partner

(56) References cited:
- WO-A-02/07931
- US-A1- 2002 039 879
- US-A1- 2002 111 122
- US-B1- 6 361 420
- US-B1- 6 447 379

## Description

The invention relates to a flexible membrane for a polishing head and a chemical mechanical polishing (CMP) apparatus having the same.

As recent semiconductor devices have become highly integrated, the wiring therein has become multi-layered. Thus, a step difference between surfaces of unit cells that are stacked on a semiconductor substrate has gradually increased. To reduce the step difference between the surfaces of the unit cells, a chemical mechanical polishing (CMP) method is often used to polish a surface of the substrate such as by using a polishing pad with slurry applied to the surface of the substrate.

A CMP apparatus for performing the CMP method is disclosed in Laid Open Publication KR 2002-0040529 as well as in US 2002/0111122. FIG. 1 shows a CMP apparatus disclosed in these Publications.

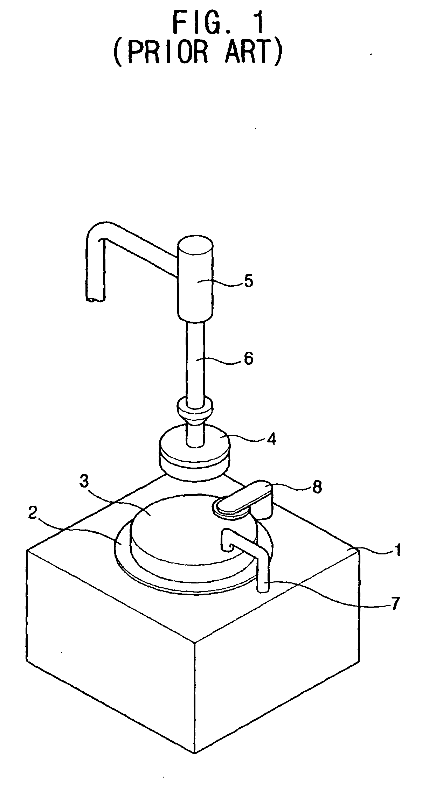

Referring to FIG. 1, the CMP apparatus includes a platen 2 disposed on a station 1. A motor (not shown) disposed in the station 1 rotates the platen 2. A polishing pad 3 for polishing a substrate is attached to a surface of the platen 2. A slurry line 7 for providing slurry to a surface of the polishing pad 3 is mounted on the station 1. In addition, a pad conditioner 8 for removing foreign substances from the polishing pad 3 is installed on the station 1.

A polishing head 4 for compressing the substrate on the polishing pad 3 is disposed over the platen 2. The polishing head 4 is connected to a motor 5 via a shaft 6. The polishing head 4 is rotated in a direction opposite that of a rotational direction of the platen 2. The polishing head 4 holds the substrate with a vacuum provided thereto and places the substrate on the polishing pad 3. In addition, the polishing head 4 compresses the substrate with a pneumatic pressure provided thereto to closely adhere the substrate to the polishing pad 3. Thus, a vacuum line (not shown) for providing the vacuum to the polishing head 4 is connected to the polishing head 4. In addition, a pneumatic pressure line (not shown) for providing the pneumatic pressure to the polishing head 4 is connected to the polishing head 4.

The polishing head 4 includes a carrier (not shown) connected to the vacuum line and the pneumatic pressure line, a supporter (not shown) disposed in the carrier, a flexible membrane (not shown) for holding the substrate with the vacuum, and a retainer ring for preventing the substrate held on the flexible membrane from being detached.

The flexible membrane includes a compressing plate having a circular shape. A sidewall is formed on an edge portion of the compressing plate. A partition wall for defining a region to which the vacuum is applied is formed on a central portion of the compressing plate.

When a surface of the substrate held on the flexible membrane is compressed and polished on the polishing pad, the surface of the substrate is polished to a uniform thickness. To uniformly polish the surface of the substrate, a uniform pressure is applied from the flexible membrane to the entire substrate.

However, because the flexible membrane is divided into a vacuum region and a pressure region, the pressure is not always uniformly applied to the whole substrate. Therefore, when a layer on the substrate is polished, the polishing speeds between the vacuum and pressure regions of the layer are different.

The non-uniform polishing speeds cause the substrate to be non-uniformly polished. Thus, the surface of the substrate may not be planarized giving the substrate an uneven surface. For example, the central portion of the substrate is typically thinned which is also known as dishing. As a result, it may be difficult to form additional layers on the uneven surface of the substrate.

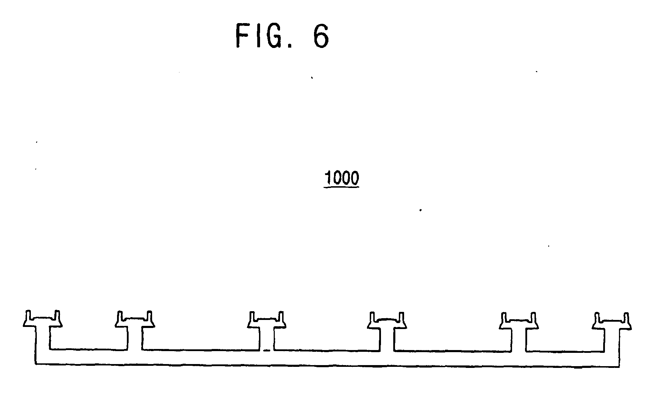

US 2002/0111122 A1 discloses a flexible membrane for a polishing head, the membrane comprising a compressing plate having a first face for holding and compressing a substrate and a second face opposite to the first face, and a dividing member formed on the second face comprising a plurality of partition walls to divide the second face into a plurality of regions for introducing selectable pneumatic pressures. A partition wall structure similar to that shown in present figure 6 and discussed below is used.

It is the technical problem underlying the invention to provide a flexible membrane for use with a polishing head that is capable of at least partly avoiding the inconveniences of the prior art mentioned above and which in particular is able to quite uniformly compress a substrate, and to provide a CMP apparatus having the flexible membrane.

The invention solves this problem by providing a flexible membrane having the features of claim 1 and a CMP apparatus having the features of claim 11. Advantageous embodiments of the invention are given in the dependent claims.

Advantageous embodiments of the invention are described in detail below and illustrated in the attached drawings, which also show comparative prior art embodiments explained for ease of understanding of the invention. In the drawings:
FIG. 1 is a perspective view illustrating a conventional chemical mechanical polishing (CMP) apparatus;
FIG. 2 is a plan view illustrating a flexible membrane in accordance with a preferred embodiment of the invention;
FIG. 3 is an enlarged perspective view of portion III of FIG. 2;
FIG. 4 is a cross sectional view along line IV-IV' of FIG. 2;
FIG. 5 is a cross sectional view illustrating a CMP apparatus having the flexible membrane of FIG. 2 in accordance with a preferred embodiment of the present invention;
FIG. 6 is a cross sectional view illustrating a conventional flexible membrane corresponding to the flexible membrane of FIG. 2;
FIG. 7A is a graph showing polishing speeds at local regions of a semiconductor substrate when a copper layer on the semiconductor substrate is polished using the flexible membrane of FIG. 6;
FIG. 7B is a graph showing polishing speeds at local regions of a semiconductor substrate when a copper layer on the semiconductor substrate is polished using the flexible membrane of FIG. 2; and
FIG. 8 is a graph showing polishing speeds at local regions of a semiconductor substrate when an oxide layer on the semiconductor substrate is polished using the flexible membrane of FIG. 2.

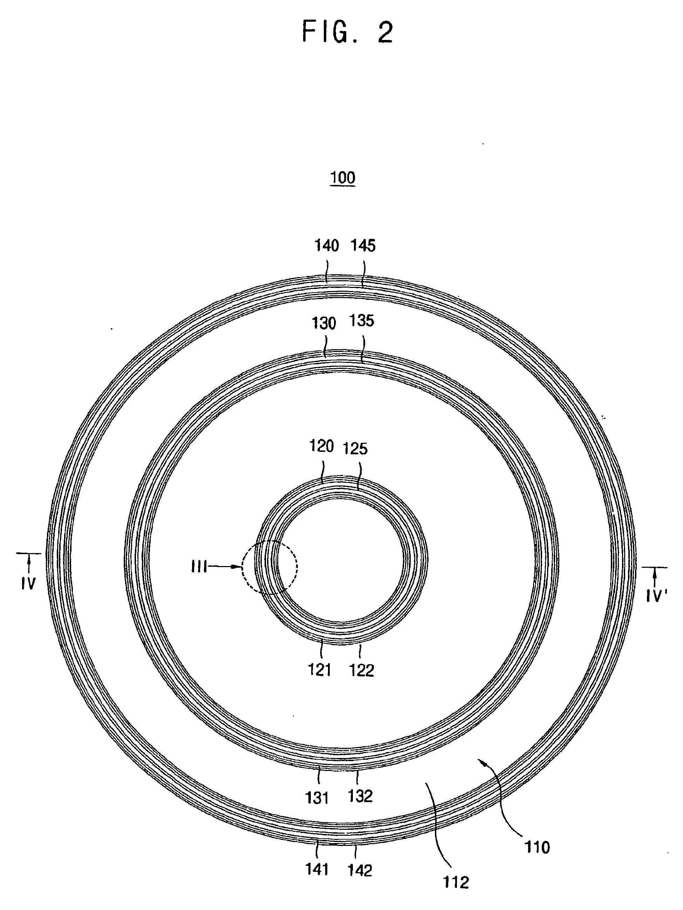

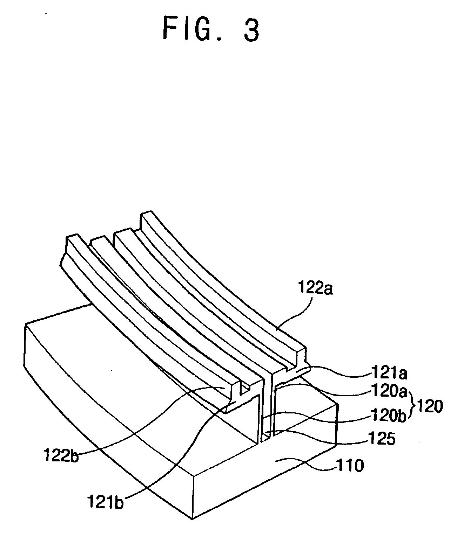

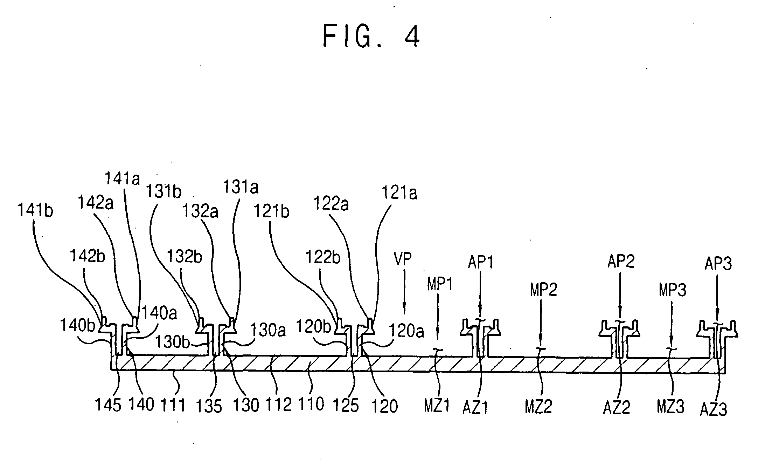

Referring to FIGS. 2 through 4, a flexible membrane 100 shown there includes a compressing plate 110, first and second partition walls 120 and 130 formed on the compressing plate 110, a sidewall 140 formed on the compressing plate 110, and slots 125, 135 and 145 formed on the first and second partition walls 120 and 130 and the sidewall 140. The first and second partition walls 120 and 130 correspond to a dividing member. In addition, each of the slots 125, 135 and 145 correspond to a pneumatic pressure-introducing portion for introducing a pneumatic pressure. The flexible membrane 100 is combined with a supporter (not shown) of a polishing head (not shown). The flexible membrane 100 holds a substrate with a vacuum VP provided thereto. Examples of the flexible membrane 100 include a rubber such as an ethylene propylene rubber, a neoprene rubber, a nitrile rubber, etc.

The compressing plate 110 has a circular shape. However, the shape of the compressing plate 110 may vary in accordance with an object to be polished. Thus, when the object is a wafer having a circular shape, the compressing plate 110 has the circular shape. On the contrary, when the object is a rectangular glass used, for example, in a liquid crystal display (LCD) device, the compressing plate 110 may have a rectangular shape.

The compressing plate 110 has a first face 111, and a second face 112 opposite to the first face 111. The first face 111 is oriented in a downward direction where a polishing pad (not shown) is disposed. The second face 112 is oriented in an upward direction. The substrate is held onto the first face 111 by the vacuum VP. The vacuum VP for holding the substrate and the pneumatic pressure for closely adhering the substrate to the polishing pad are selectively provided to the second face 112.

The sidewall 140 is formed on an edge portion of the second face 112. Thus, the sidewall 140 has an annular shape. The sidewall 140 is combined with the supporter. The sidewall 140 and the supporter define an isolated space over the second face 112.

The dividing member includes the first and second partition walls 120 and 130 having a height substantially identical to that of the sidewall 140 and also having an annular shape. The first partition wall 120 is disposed on a central portion of the second face 112. The first partition wall 120 is combined with the supporter to define a vacuum region MZ1 into which the vacuum VP and a first main pneumatic pressure MP1 are selectively introduced.

The second partition wall 130 is disposed between the first partition wall 120 and the sidewall 140. Thus, the first and second partition walls 120 and 130 and the sidewall 140 are disposed in concentric circles. Alternatively, when the compressing plate 110 has a rectangular shape, the first and second partition walls 120 and 130 and the sidewall 140 are disposed in concentric rectangles. Even if the compressing plate 110 has the rectangular shape, the first and second partition walls 120 and 130 and the sidewall 140 may still be disposed in concentric circles. The second partition wall 130 is combined with the supporter to divide a space between the first partition wall 120 and the sidewall 140 into two spaces.

The space between the first and second partition walls 120 and 130 is defined as a main pressure region MZ2 to which a second main pneumatic pressure MP2 for compressing the substrate is applied. The space between the second partition wall 130 and the sidewall 140 is defined as a peripheral pressure region MZ3 to which a third main pneumatic pressure MP3 for compressing the substrate is applied. That is, the substrate is held onto the first face 111 of the compressing plate 110 by the vacuum VP provided to the vacuum region MZ1. In addition, the substrate is adhered to the polishing pad by the first, second and third main pneumatic pressures MP1, MP2 and MP3 provided to the vacuum region MZ1, the main pressure region MZ2 and the peripheral pressure region MZ3, respectively.

To provide first, second and third auxiliary pressures AP1, AP2 and AP3 through the first and second partition walls 120 and 130 and the sidewall 140 to the compressing plate 110, respectively, the first, second and third pneumatic pressure-introducing portions are formed at the first and second partition walls 120 and 130 and the sidewall 140, respectively. The first pneumatic pressure-introducing portion includes the first slot 125 formed at the first partition wall 120, the second pneumatic pressure-introducing portion includes the second slot 135 formed at the second partition wall 130, and the third pneumatic pressure-introducing portion includes the third slot 145 formed at the sidewall 140. The first, second and third slots 125, 135 and 145 are formed from surfaces of the first and second partition walls 120 and 130 and the sidewall 140 to the second face of the compressing plate 110. The first, second and third slots 125, 135 and 145 extend in a direction in accordance with a longitudinal direction of the first and second partition walls 120 and 130 and the sidewall 140.

The first, second and third slots 125, 135 and 145 have annular shapes, respectively. Therefore, the first, second and third slots 125, 135 and 145 are disposed in concentric circles substantially similar to those of the first and second partition walls 120 and 130 and the sidewall 140. The first slot 125 divides the first partition wall 120 into a first inner wall 120a and a first outer wall 120b. The second slot 135 divides the second partition wall 130 into a second inner wall 130a and a second outer wall 130b. In addition, the third slot 145 divides the sidewall 140 into an inner sidewall 140a and an outer sidewall 140b.

First, second and third auxiliary region-forming members are formed at the first and second partition walls 120 and 130 and the sidewall 140, respectively. The first, second and third auxiliary region-forming members define first, second and third auxiliary pressure regions AZ1, AZ2 and AZ3, respectively. The first auxiliary pressure region-forming member includes a first partition plate formed on the first partition wall 120 to define the first auxiliary pressure region AZ1, the second auxiliary pressure region-forming member includes a second partition plate formed on the second partition wall 130 to define the second auxiliary pressure region AZ2, and the third auxiliary pressure region-forming member includes a third partition plate formed on the sidewall 140 to define the third auxiliary pressure region AZ3.

The first, second and third partition plates include first, second and third inner extending portions 121 a, 131 a and 141 a horizontally extending from upper inner ends of the first and second partition walls 120 and 130 and the sidewall 140, respectively, first, second and third outer extending portions 121b, 131b and 141b horizontally extending from upper outer ends of the first and second partition walls 120 and 130 and the sidewall 140, respectively, first, second and third inner fencing portions 122a, 132a and 142a upwardly extending from ends of the first, second and third extending portions 121a, 131a and 141a, respectively, and first, second and third outer fencing portions 122b, 132b and 142b upwardly extending from ends of the first, second and third outer extending portions 121b, 131b and 141b, respectively. In particular, surfaces of the first, second and third inner extending portions 121a, 131a and 141a and surfaces of the first, second and third outer extending portions 121b, 131b and 141b are lower than those of the first and second partition walls 120 and 130 and the sidewall 140 so that step differences between the surfaces of the extending portions 121a, 121b, 131a, 131b, 141 a, 141b and the surfaces of the walls 120, 130 and 140 are formed.

Upper ends of the first inner and outer fencing portions 122a and 122b are combined with the supporter to form a space surrounded by the first partition plate, the supporter and the surface of the first partition wall 120. This space is defined as the first auxiliary pressure region AZ1 to which the first auxiliary pneumatic pressure AP1 is applied.

Upper ends of the second inner and outer fencing portions 132a and 132b are combined with the supporter to form a space surrounded by the second partition plate, the supporter and the surface of the second partition wall 130. This space is defined as the second auxiliary pressure region AZ2 to which the second auxiliary pneumatic pressure AP2 is applied.

Upper ends of the third inner and outer fencing portions 142a and 142b are combined with the supporter to form a space surrounded by the third partition plate, the supporter and the surface of the sidewall 140. This space is defined as the third auxiliary pressure region AZ3 to which the third auxiliary pneumatic pressure AP3 is applied.

The first, second and third slots 125, 135 and 145 are formed from the surfaces of the first and second partition walls 120 and 130 and the sidewall 140 to the compressing plate 110. Thus, the first, second and third slots 125, 135 and 145 are in communication with the first, second and third auxiliary pressure regions AZ1, AZ2 and AZ3, respectively. As a result, the first, second and third auxiliary pressure regions AZ1, AZ2 and AZ3 have spaces expanded by volumes of the first, second and third slots 125, 135 and 145, respectively.

Each of the first, second and third slots 125, 135 and 145 has a depth substantially identical to each of heights of the first and second partition walls 120 and 130 and the sidewall 140. The first, second and third auxiliary pneumatic pressures AP1, AP2 and AP3 are directly provided to the second face 112 of the compressing plate 110 through the first, second and third slots 125, 135 and 145, respectively. Therefore, the first, second and third auxiliary pneumatic pressures AP1, AP2 and AP3 provided to the compressing plate 110 through the first, second and third auxiliary pressure regions AZ1, AZ2 and AZ3, respectively, are substantially identical to the first, second and third main pneumatic pressures MP1, MP2 and MP3 providing the compressing plate 110 through the vacuum region MZ1, the main pressure region MZ2 and the peripheral pressure region MZ3, respectively. Therefore, a uniform pressure is provided to the second face 112 of the compressing plate 110 so that the first face 111 of the compressing plate 110 uniformly adheres to the substrate on the polishing pad.

As shown in FIGS. 2 through 4, upper widths of the first, second and third slots 125, 135 and 145 are substantially identical to lower widths of the first, second and third slots 125, 135 and 145, respectively. Alternatively, to enlarge surface portions of the compressing plate 110 exposed through the first, second and third slots 125, 135 and 145, the first, second and third slots 125, 135 and 135 may have shapes that have gradually widening widths from an upper position to a lower position. In addition, the first, second and third slots 125, 135 and 145 may have dual structures that have, for example, a lower width wider than an upper width.

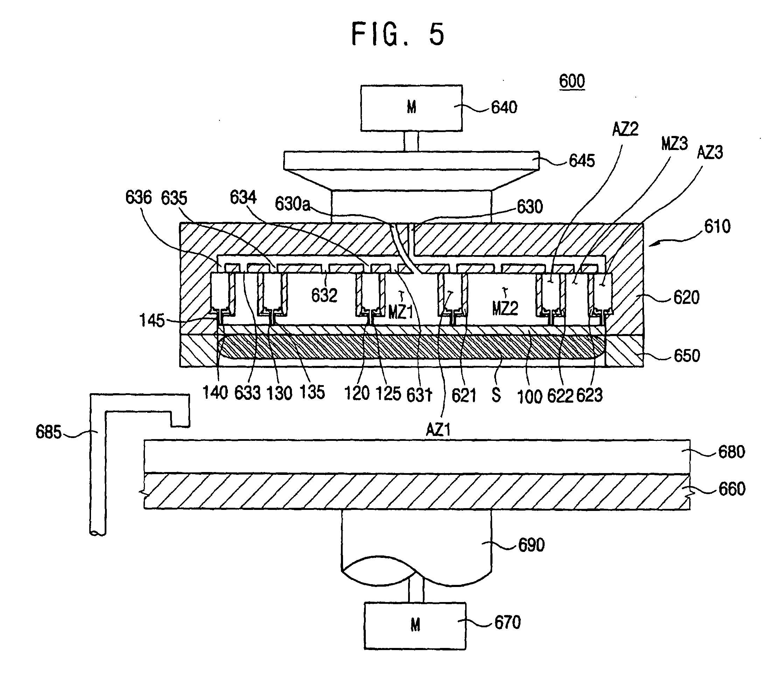

Referring to FIG. 5, showing a CMP 600 apparatus having the flexible membrane 100 of FIG. 2 in accordance with a preferred embodiment of the invention, the CMP apparatus 600 includes a platen 660 and a polishing head 610 disposed over the platen 660. A polishing pad 680 on which a substrate S is closely adhered is attached to a surface of the platen 660. The platen 660 is connected to a first motor 670 via a shaft 690. A slurry line 685 for providing slurry to a surface of the polishing pad 680 is disposed adjacent to the surface of the polishing pad 680.

The polishing head 610 includes a second motor 640, a supporter 620 connected to the second motor 640 via a shaft 645, the flexible membrane 100 supported by the supporter 620 for holding the substrate S, and a retainer ring 650 for preventing the substrate S held by the flexible membrane 100 from being detached.

As described above with reference to FIGS. 2 through 4, the flexible membrane 100 has the pneumatic pressure-introducing portions corresponding to the slots 125, 135 and 145. As like reference numerals refer to identical elements of the flexible membrane 100, further illustrations of the flexible membrane 100 and other elements in FIGS. 2 through 4 are omitted. The flexible membrane 100 is supported on a lower face of the supporter 620. The substrate S is held onto a lower face of the flexible membrane 100 and is closely adhered to the surface of the polishing pad 680.

The retainer ring 650 is mounted on an edge portion of the lower face of the supporter 620 to prevent the detachment of the substrate S from the flexible membrane 100 in a polishing operation.

The supporter 620 has a structure that includes a space for receiving the flexible membrane 100 therein. Further, the supporter 620 includes first and second partition wall-supporting portions 621 and 622 for supporting the first and second partition walls 120 and 130 of the flexible membrane 100, and a sidewall-supporting portion 623 for supporting the sidewall 140 of the flexible membrane 100.

The vacuum region MZ1 is defined by the first partition wall 120, the first partition wall-supporting portion 621, the lower face of the supporter 620 and the surface of the compressing plate 110. The main pressure region MZ2 is defined by the first and second partition walls 120 and 130, the first and second partition wall-supporting portions 621 and 622, the lower face of the supporter 620 and the surface of the compressing plate 110. In addition, the peripheral pressure region MZ3 is defined by the second partition wall 130, the sidewall 140, the second partition wall-supporting portion 622, the sidewall-supporting portion 623, the lower face of the supporter 620 and the surface of the compressing plate 110.

The first auxiliary pressure region AZ1 is defined by the surface of the first partition wall 120, the first partition plate and the lower face of the supporter 620. The second auxiliary pressure region AZ2 is defined by the surface of the second partition wall 130, the second partition plate and the lower face of the supporter 620. In addition, the third auxiliary pressure region AZ3 is defined by the surface of the sidewall 140, the third partition plate and the lower face of the supporter 620.

A first passageway 630 for providing the pneumatic pressures MP1, MP2, MP3, AP1, AP2 and AP3 to the regions MZ1, MZ2, MZ3, AZ1, AZ2 and AZ3, respectively, is formed through the supporter 620. The first passageway 630 diverges into first, second and third main passageways 631, 632 and 633 for providing the first, second and third main pneumatic pressures MP1, MP2 and MP3 to the vacuum region MZ1, the main pressure region MZ2 and the peripheral pressure region MZ3, respectively, and first, second and third auxiliary passageways 634, 635 and 636 for providing the first, second and third auxiliary pneumatic pressures AP1, AP2 and AP3 to the auxiliary pressure regions AZ1, AZ2 and AZ3, respectively.

A second passageway 630a for providing the vacuum VP for holding the substrate S onto the vacuum region MZ1 is formed through the supporter 620. The substrate S is adhered to the lower face of the compressing plate 110 by the vacuum VP that is provided to the vacuum region MZ1 through the second passageway 630a.

The pneumatic pressures MP1, MP2, MP3, AP1, AP2 and AP3 are provided to the regions MZ1, MZ2, MZ3, AZ1, AZ2 and AZ3 through the first passageway 630. In particular, the first, second and third main pneumatic pressures MP1, MP2 and MP3 are directly provided to the surface of the compressing plate 110 through the first, second and third main passageways 631, 632 and 633. The first, second and third auxiliary pneumatic pressures AP1, AP2 and AP3 are directly provided to the surface of the compressing plate 110 through the first, second and third auxiliary passageways 634, 635, and 636.

The substrate S is uniformly adhered to the polishing pad 680 by the main and auxiliary pneumatic pressures MP1, MP2, MP3, AP1, AP2 and AP3. The slurry is then provided to the surface of the polishing pad 680 from the slurry line 685. The first motor 670 rotates the polishing pad 680 in a first direction, for example, in a clockwise direction. In addition, the second motor 640 rotates the polishing head 610 in a second direction opposite to the first direction, for example, in a counterclockwise direction. Thus, the substrate S is rotated and simultaneously compressed on the polishing pad 680, thereby polishing the surface of the substrate S to a uniform thickness.

In an experiment, polishing characteristics of a flexible membrane having a size of about 200mm without pneumatic pressure-introducing portions and the flexible membrane 100 of FIG. 2 were compared to each other.

To compare the polishing characteristics between the flexible membranes, a flexible membrane 1000 without the pneumatic pressure-introducing portions shown in FIG. 6 was manufactured. The flexible membrane 1000 had a size and a configuration substantially identical to that of the flexible membrane 100 except that the flexible membrane 1000 did not have the pneumatic pressure-introducing portions. The flexible membrane 1000 and the flexible membrane 100 were employed in the CMP apparatus 600 of FIG. 5.

In order to form a layer to be polished, an oxide layer having a thickness of about 6.000Å was formed on a semiconductor substrate having a size of about 200mm. A tantalum layer having a thickness of about 250Å was formed on the oxide layer. A seed layer including copper and having a thickness of about 1,500Å was formed on the tantalum layer. A copper layer having a thickness of about 14.000Å was then formed on the seed layer using an electroplating method. Two semiconductor substrates having the above structure were then prepared.

Pneumatic pressures for polishing were applied to the flexible membranes 100 and 1000, respectively, and were measured. The measured pneumatic pressures are shown in following Table 1.

**Table 1**

| Region | | MZ1 | MZ2 | MZ3 | AZ1 | AZ2 | AZ3 |
|---|---|---|---|---|---|---|---|
| Pneumatic pressure (psi) | Flexible membrane 1000 | 2.8 | 2.45 | 2.6 | 4.0 | 3.5 | 2.0 |
| | Flexible membrane 100 | 2.4 | 2.23 | 2.3 | 2.0 | 1.8 | 1.0 |

As shown in Table 1, in the flexible membrane 1000 the first main pneumatic pressure MP1 provided to the vacuum region MZ1 is 2.8 psi, the second main pneumatic pressure MP2 provided to the main pressure region MZ2 is 2.45 psi, and the third main pneumatic pressure MP3 provided to the peripheral pressure region MZ3 is 2.6 psi. In addition, the first auxiliary pneumatic pressure AP1 provided to the first auxiliary pressure region AZ1 is 4.0 psi, the second auxiliary pneumatic pressure AP2 provided to the second auxiliary pressure region AZ2 is 3.5 psi, and the third auxiliary pneumatic pressure AP3 provided to the third auxiliary pressure region is 2.0 psi.

According to the above measurements, it can be observed that the auxiliary pneumatic pressures AP1, AP2 and AP3 in the auxiliary pressure regions AZ1, AZ2 and AZ3 in the flexible membrane 1000 were very different from each other. On the contrary, as shown in Table 1, in the flexible membrane 100 the first main pneumatic pressure MP1 provided to the vacuum region MZ1 is 2.4 psi, the second main pneumatic pressure MP2 provided to the main pressure region MZ2 is 2.23 psi, and the third main pneumatic pressure MP3 provided to the peripheral pressure region MZ3 is 2.3 psi. In addition, the first auxiliary pneumatic pressure AP1 provided to the first auxiliary pressure region AZ1 is 2.0 psi, the second auxiliary pneumatic pressure AP2 provided to the second auxiliary pressure region AZ2 is 1.8 psi, and the third auxiliary pneumatic pressure AP3 provided to the third auxiliary pressure region is 1.0 psi.

Thus, according to the above measurements, it can be observed that the auxiliary pneumatic pressures AP1, AP2 and AP3 in the auxiliary pressure regions AZ1, AZ2 and AZ3 were lower than the main pneumatic pressures MP1, MP2 and MP3 in the vacuum region MZ1, the main pressure region MZ2 and the peripheral pressure region MZ3, respectively, in the flexible membrane 100.

Polishing processes were also performed on the two semiconductor substrates using the CMP apparatuses having the flexible membranes 100 and 1000. Here, an abrasive-free slurry was used as an abrasive. A rotational speed of the polishing head was about 23 rpm and a rotational speed of the platen was about 600 rpm. In addition, the polishing processes were performed for about 90 seconds.

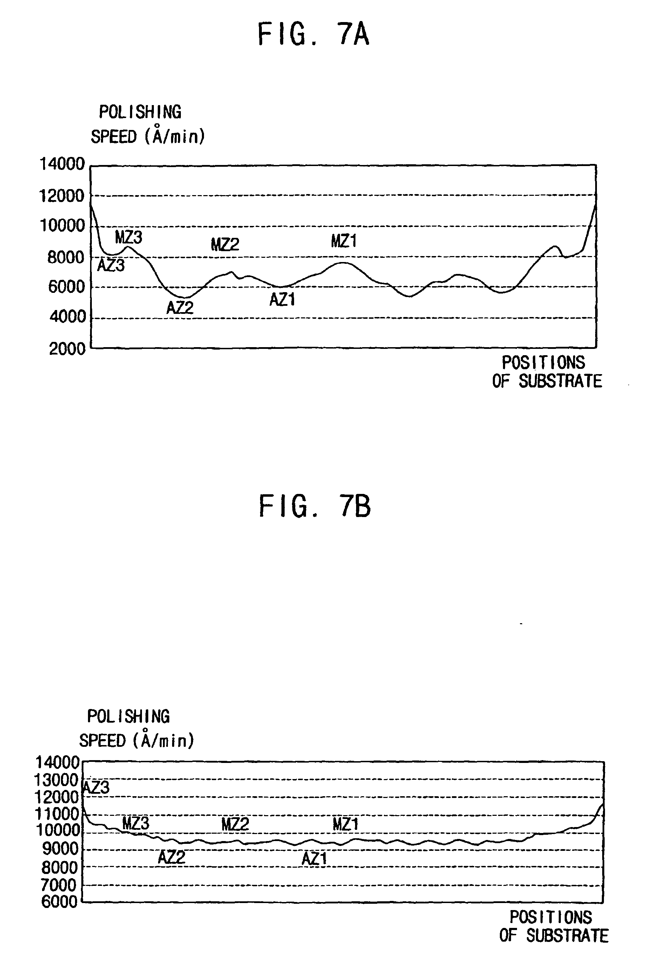

FIG. 7A is a graph showing polishing speeds at positions of a semiconductor substrate when a copper layer on the semiconductor substrate is polished using the flexible membrane 1000 of FIG. 6. FIG. 7B is a graph showing polishing speeds at positions of a semiconductor substrate when a copper layer on the semiconductor substrate is polished using the flexible membrane 100 of FIG. 2. In FIGS. 7A and 7B, a horizontal axis represents positions of the substrate and a vertical axis represents a polishing speed.

As shown in FIG. 7A, a polishing speed with respect to portions of the substrate, which correspond to the vacuum region MZ1, the main pneumatic pressure region MZ2 and the peripheral pneumatic pressure region MZ3, was about 8,000Å/min. A polishing speed with respect to portions of the substrate, which correspond to the first and second auxiliary pressure regions AZ1 and AZ2, was about 6,000Å/min. A polishing speed with respect to a portion of the substrate, which corresponds to the third auxiliary pressure region, was about 11,000Å/min.

The polishing speeds between the main pressure regions MZ1, MZ2 and MZ3 and the auxiliary pressure regions AZ1, AZ2 and AZ3 were very different from each other. This was due to the measured pneumatic pressures. For example, the pneumatic pressures in the auxiliary pressure regions AZ1, AZ2 and AZ3 were considerably different from those in the vacuum region MZ1, the main pressure region MZ2 and the peripheral pressure region MZ3. In addition, the pneumatic pressures in the auxiliary pressure regions AZ1, AZ2 and AZ3 were different from each other. As a result, the flexible membrane 1000 does not always uniformly compress the substrate on the polishing pad.

On the contrary, as shown in FIG. 7B, polishing speeds were about 9,500Å/min to about 10,000Å/min in all the regions except the third auxiliary pressure region AZ3 in which a polishing speed was no less than about 11,000Å/min.

The auxiliary pneumatic pressures applied to the auxiliary pressure regions AZ1, AZ2 and AZ3 were substantially similar to each other and were also little different from the main pneumatic pressures applied to the main pressure regions MZ1, MZ2 and MZ3. Therefore, the flexible membrane 100 in accordance with the present invention uniformly compresses the substrate on the polishing pad so that the CMP apparatus having the flexile membrane 100 can polish the substrate to a uniform thickness.

In another experiment regarding polishing characteristics of the flexible membrane 100, a fluorine doped silicate glass (FSG) having a thickness of about 3,000Å was deposited on a semiconductor substrate.

A polishing process was performed on the substrate using the flexible membrane 100 for about 90 seconds. In this polishing process, a silica-based slurry was used as an abrasive. A rotational speed of the polishing head was about 23 rpm and a rotational speed of the platen was about 300 rpm.

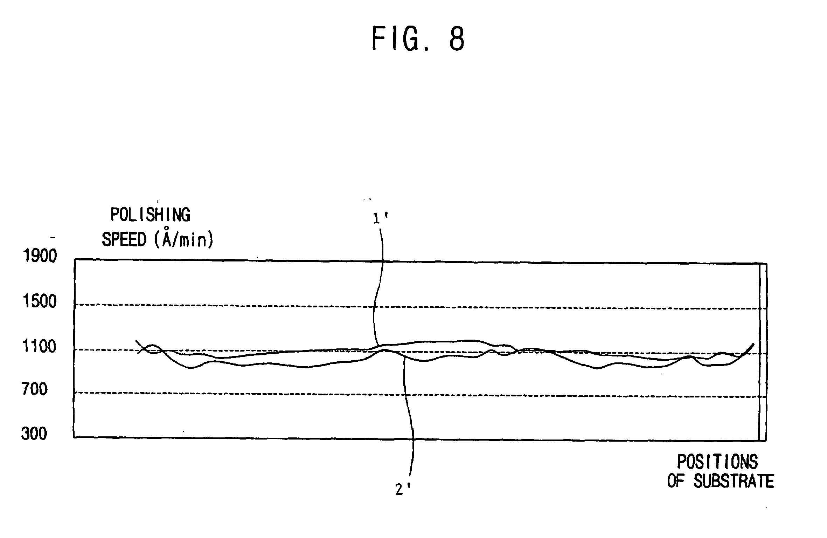

FIG. 8 is a graph showing polishing speeds at positions of a semiconductor substrate when an FSG layer on the semiconductor substrate is polished using the flexible membrane 100. In FIG. 8, line 1' represents a desired target polishing speed and line 2' represents an actual polishing speed.

As shown in FIG. 8, when the substrate was polished using the CMP apparatus having the flexible membrane 100, the actual polishing speed was substantially identical or similar to the target polishing speed. In addition, the actual polishing speeds at certain positions of the substrate were substantially similar to each other.

Thus, the CMP apparatus having the flexible membrane 100 polished the substrate to a uniform thickness. As a result, the flexible membrane 100 closely adhered the substrate to the polishing pad.

According to a preferred embodiment of invention, the pneumatic pressure-introducing portions are formed at the dividing member and the sidewall so that the pneumatic pressure is directly provided to the portions of the compressing plates under the dividing member and the sidewall. Thus, because the uniform pneumatic pressure is applied to the compressing plate, the compressing plate closely adheres the substrate to the polishing pad. As a result, the substrate may be polished to a uniform thickness.

The scope of the invention is defined by the appended claims.

## Claims

1. A flexible membrane for a polishing head, comprising
a compressing plate (110) having a first face (111) for holding and compressing a substrate and a second face (112) opposite to the first face, and
a dividing member (120, 130) formed on the second face comprising at least a first partition wall (120) projecting from the second face to divide the second face into at least two regions (MZ1, MZ2) for introducing a first main pneumatic pressure (MP1) to at least one of these two regions of the second face for compressing the substrate,
wherein the first partition wall comprises
an inner wall (120a, 130a),
an outer wall (120b, 130b) facing the inner wall, the inner and outer walls defining a first pneumatic pressure-introducing portion to comprise a slot (125) longitudinally extending in the partition wall (120) from a top surface thereof down with a depth substantially identical to a height of the partition wall,
an inner extending portion (121a, 131 a) horizontally extending from an upper end of the inner wall to a central portion of the compressing plate,
an outer extending portion (121b, 13 1 b) horizontally extending from an upper end of the outer wall to an edge portion of the compressing plate,
an inner fencing portion (122a, 132a) upwardly extending from an end of the inner extending portion, and
an outer fencing portion (122b, 132b) upwardly extending from an end of the outer extending portion,
wherein a first auxiliary pressure region (AZ1) including the first pneumatic pressure-introducing portion (125) for introducing a first auxiliary pneumatic pressure (AP1) onto the second face (112) is defined by a space between the inner and the outer wall (120a, 120b), the inner and the outer extending portion (121a, 121b) and the inner and the outer fencing portion (122a, 122b) of the first partition wall.

2. The flexible membrane of claim 1, wherein the dividing member comprises:
the first partition wall (120) disposed on a central portion of the second face, the first partition wall defining a vacuum region (MZ1) for selectively applying a vacuum (VP) for holding the substrate or applying the first pneumatic pressure as a first main pneumatic pressure for compressing the substrate; and
a second partition wall (130) disposed on a portion of the second face outside the first partition wall, the second partition wall defining a main pressure region (MZ2) into which a second main pneumatic pressure is introduced.

3. The flexible membrane of claim 1 or 2, further comprising a sidewall (140) disposed on an edge portion of the second face.

4. The flexible membrane of any of claims 1 to 3, wherein the first pneumatic pressure-introducting portion is adapted to introduce the first auxiliary pneumatic pressure so as to be substantially equal to or less than the first pneumatic pressure.

5. The flexible membrane of any of claims 2 to 4, wherein
the second partition wall has a second pneumatic pressure-introducing portion (135) for introducing a second auxiliary pneumatic pressure (AP2) onto the second face; and/or
the sidewall defines a peripheral pressure region (MZ3) with the second partition wall for introducing a third main pneumatic pressure (MP3).

6. The flexible membrane of any of claims 3 to 5, further comprising a third pneumatic pressure-introducing portion (145) for introducing a third auxiliary pneumatic pressure (AP3) onto the edge portion of the second face formed at the sidewall.

7. The flexible membrane of any of claims 1 to 6, wherein the second and/or the third pneumatic pressure-introducing portion comprises a slot (135, 145) formed in the partition wall and/or the sidewall.

8. The flexible membrane of claim 7, wherein the respective slot extends in a longitudinal direction in the partition wall and/or the sidewall and/or wherein the slot has a depth substantially identical to a height of the partition walls and/or the sidewall.

9. The flexible membrane of any of claims 5 to 8, wherein the second pneumatic pressure-introducting portion is adapted to introduce the second auxiliary pneumatic pressure so as to be less that the second main pneumatic pressure.

10. The flexible membrane of any of claims 1 to 9, wherein the compressing plate and/or the dividing member comprises one of an ethylene propylene rubber, a neoprene rubber and a nitrile rubber.

11. A chemical mechanical polishing (CMP) apparatus comprising:
a platen (660) having a pad (680) for polishing a substrate; and
a polishing head (610) disposed over the platen, the polishing head including a flexible membrane (100) for holding and compressing the substrate on the polishing pad and a supporter (620) for supporting the flexible membrane;
**characterized in that**
the flexible membrane is one according to any of claims 1 to 10.

## Patentansprüche

1. Flexible Membran für einen Polierkopf, mit
- einer Druckplatte (110) mit einer ersten Seite (111), um ein Substrat zu halten und unter Druck zu setzen, und einer der ersten Seite gegenüberliegenden zweiten Seite (112) und
- einem Aufteilungselement (120, 130), das an der zweiten Seite gebildet ist und wenigstens eine erste Teilungswand (120) aufweist, die sich von der zweiten Seite erstreckt, um die zweite Seite in wenigstens zwei Bereiche (MZ1, MZ2) zum Anlegen eines ersten pneumatischen Hauptdruck (MP1) an wenigstens einen dieser beiden Bereiche der zweiten Seite aufzuteilen, um das Substrat unter Druck zu setzen,
- wobei die erste Teilungswand umfasst:
- eine Innenwand (120a, 130a),
- eine Außenwand (120b, 130b) gegenüber der Innenwand, wobei die Innenwand und die Außenwand einen Bereich zum Anlegen eines ersten pneumatischen Drucks definieren, der einen Schlitz (125) beinhaltet, welcher sich in der Teilungswand (120) longitudinal von einer Oberseite derselben bis zu einer Tiefe erstreckt, die im Wesentlichen gleich einer Höhe der Teilungswand ist,
- einen inneren Fortsatzabschnitt (121a, 131a), der sich von einem oberen Ende der Innenwand horizontal in Richtung eines Mittenbereichs der Druckplatte erstreckt,
- einen äußerem Fortsatzabschnitt (121 b, 131 b), der sich von einem oberen Ende der Außenwand horizontal in Richtung eines Randbereichs der Druckplatte erstreckt,
- einen inneren Begrenzungsabschnitt (122a, 132a), der sich von einem Ende des inneren Fortsatzabschnitts nach oben erstreckt, und
- einen äußeren Begrenzungsabschnitt (122b, 132b), der sich von einem Ende des äußeren Fortsatzabschnitts nach oben erstreckt,
- wobei ein erster Hilfsdruckbereich (AZ1), der den Bereich (125) zum Anlegen eines ersten pneumatischen Drucks beinhaltet, zum Anlegen eines ersten pneumatischen Hilfsdrucks (AP1) an die zweite Seite (112) durch einen Zwischenraum zwischen der Innenwand und der Außenwand (120a, 120b), dem inneren und dem äußeren Fortsatzabschnitt (121 a, 121b) und dem inneren und dem äußerem Begrenzungsabschnitt (122a, 122b) der ersten Teilungswand definiert ist.

2. Flexible Membran nach Anspruch 1, wobei das Aufteilungselement umfasst:
- die an einem Mittenbereich der zweiten Seite angeordnete, erste Teilungswand (120), die einen Vakuumbereich (MZ1) zum selektiven Anlegen eines Vakuums (VP) zum Halten des Substrats oder zum Anlegen des ersten pneumatischen Drucks als einen ersten pneumatischen Hauptdruck, um das Substrat unter Druck zu setzen, definiert, und
- eine zweite Teilungswand (130), die in einem Bereich der zweiten Seite außerhalb der ersten Teilungswand angeordnet ist und einen Hauptdruckbereich (MZ2) definiert, in welchem ein zweiter pneumatischer Hauptdruck angelegt wird.

3. Flexible Membran nach Anspruch 1 oder 2, die des Weiteren eine Seitenwand (140) aufweist, welche an einem Randbereich der zweiten Seite angeordnet ist.

4. Flexible Membran nach einem der Ansprüche 1 bis 3, wobei der Bereich zum Anlegen des ersten pneumatischen Drucks dafür eingerichtet ist, den ersten pneumatischen Hilfsdruck derart anzulegen, dass er im Wesentlichen gleich groß oder kleiner ist als der erste pneumatische Druck.

5. Flexible Membran nach einem der Ansprüche 2 bis 4, wobei
- die zweite Teilungswand einen Bereich (135) zum Anlegen eines zweiten pneumatischen Drucks aufweist, um einen zweiten pneumatischen Hilfsdruck (AP2) an die zweite Seite anzulegen, und/oder
- die Seitenwand einen peripheren Druckbereich (MZ3) definiert, wobei die zweite Teilungswand zum Anlegen eines dritten pneumatischen Hauptdrucks (MP3) dient.

6. Flexible Membran nach einem der Ansprüche 3 bis 5, die des Weiteren einen Bereich (145) zum Anlegen eines dritten pneumatischen Drucks aufweist, der an der Seitenwand gebildet ist, um einen dritten pneumatischen Hilfsdruck (AP3) an den Randbereich der zweiten Seite anzulegen.

7. Flexible Membran nach einem der Ansprüche 1 bis 6, wobei der Bereich zum Anlegen des zweiten pneumatischen Drucks und/oder der Bereich zum Anlegen des dritten pneumatischen Drucks einen Schlitz (135, 145) aufweist, der in der Teilungswand und/oder der Seitenwand gebildet ist.

8. Flexible Membran nach Anspruch 7, wobei sich der jeweilige Schlitz in einer Längsrichtung in der Teilungswand und/oder der Seitenwand erstreckt und/oder wobei der Schlitz eine Tiefe aufweist, die im Wesentlichen gleich einer Höhe der Teilungswände und/oder der Seitenwand ist.

9. Flexible Membran nach einem der Ansprüche 5 bis 8, wobei der Bereich zum Anlegen des zweiten pneumatischen Drucks dafür eingerichtet ist, den zweiten pneumatischen Hilfsdruck so anzulegen, dass er niedriger als der zweite pneumatische Hauptdruck ist.

10. Flexible Membran nach einem der Ansprüche 1 bis 9, wobei die Druckplatte und/oder das Teilungselement einen Ethylen-Propylen-Gummi, einen Neoprengummi und/oder einen Nitrilgummi aufweist.

11. Vorrichtung zum chemisch-mechanischen Polieren (CMP), mit
- einer Platte (660) mit einem Pad (680) zum Polieren eines Substrates und
- einem über der Platte angeordneten Polierkopf (610), der eine flexible Membran (100), um das Substrat auf den Polierpad zu halten und unter Druck zu setzen, und einen Träger (620) zum Tragen der flexiblen Membran aufweist,
**dadurch gekennzeichnet, dass**
- die flexible Membran eine solche nach einem der Ansprüche 1 bis 10 ist.

## Revendications

1. Membrane flexible pour un touret à polir, comprenant :
une plaque de compression (110) ayant une première face (111) pour maintenir et comprimer un substrat et une seconde face (112) opposée à la première face, et
un élément de séparation (120, 130) formé sur la seconde face, comprenant au moins une première cloison (120) faisant saillie à partir de la seconde face pour diviser la seconde face en au moins deux régions (MZ1, MZ2), afin d'introduire une première pression pneumatique principale (MP1) dans au moins l'une de ces deux régions de la seconde face pour comprimer le substrat,
dans laquelle la première cloison comprend :
une paroi intérieure (120a, 130a),
une paroi extérieure (120b, 130b) faisant face à la paroi intérieure, les parois intérieure et extérieure définissant une partie d'introduction de première pression pneumatique pour comprendre une fente (125) s'étendant de manière longitudinale dans la cloison (120), d'une surface supérieure de celle-ci vers le bas, avec une profondeur sensiblement identique à une hauteur de la cloison,
une partie s'étendant à l'intérieur (121a, 131a), s'étendant horizontalement d'une extrémité supérieure de la paroi intérieure à une partie centrale de la plaque de compression,
une partie s'étendant à l'extérieur (121b, 131b), s'étendant horizontalement d'une extrémité supérieure de la paroi extérieure à une partie de bord de la plaque de compression,
une partie intérieure de guidage (122a, 132a) s'étendant vers le haut à partir d'une extrémité de la partie s'étendant à l'intérieur, et
une partie extérieure de guidage (122b, 132b) s'étendant vers le haut à partir d'une extrémité de la partie s'étendant à l'extérieur,
dans laquelle une région de première pression auxiliaire (AZ1) comprenant la partie d'introduction de première pression pneumatique (125) conçue pour introduire une première pression pneumatique auxiliaire (AP1) sur la seconde face (112), est définie par un espace entre les parois intérieure et extérieure (120a, 120b), les parties s'étendant à l'intérieur et à l'extérieur (121a, 121b) et les parties de guidage intérieure et extérieure (122a, 122b) de la première cloison.

2. Membrane flexible selon la revendication 1, dans laquelle l'élément de séparation comprend :
la première cloison (120) disposée sur une partie centrale de la seconde face, la première cloison définissant une région sous vide (MZ1) conçue pour appliquer un vide (VP) de manière sélective, afin de maintenir le substrat ou pour appliquer la première pression pneumatique en tant que première pression pneumatique principale afin de comprimer le substrat ; et
une seconde cloison (130) disposée sur une partie de la seconde face à l'extérieur de la première cloison, la seconde cloison définissant une région sous pression principale (MZ2), dans laquelle une deuxième pression pneumatique principale est introduite.

3. Membrane flexible selon la revendication 1 ou 2, comprenant en outre, une paroi latérale (140) disposée sur une partie de bord de la seconde face.

4. Membrane flexible selon l'une quelconque des revendications 1 à 3, dans laquelle la partie d'introduction de première pression pneumatique est conçue pour introduire la première pression pneumatique auxiliaire, de manière à ce qu'elle soit sensiblement inférieure ou égale à la première pression pneumatique.

5. Membrane flexible selon l'une quelconque des revendications 2 à 4, dans laquelle :
la seconde cloison a une partie (135) d'introduction de deuxième pression pneumatique, conçue pour introduire une deuxième pression pneumatique auxiliaire (AP2) sur la seconde face ; et/ou
la paroi latérale définit une région sous pression périphérique (MZ3) avec la seconde cloison pour introduire une troisième pression pneumatique principale (MP3).

6. Membrane flexible selon l'une quelconque des revendications 3 à 5, comprenant en outre, une partie (145) d'introduction de troisième pression pneumatique conçue pour introduire une troisième pression pneumatique auxiliaire (AP3) sur la partie de bord de la seconde face formée au niveau de la paroi latérale.

7. Membrane flexible selon l'une quelconque des revendications 1 à 6, dans laquelle la partie d'introduction de deuxième et/ou de troisième pression pneumatique comprend une fente (135, 145) formée dans la cloison et/ou dans la paroi latérale.

8. Membrane flexible selon la revendication 7, dans laquelle la fente respective s'étend dans une direction longitudinale dans la cloison et/ou dans la paroi latérale, et/ou dans laquelle la fente a une profondeur sensiblement identique à une hauteur des cloisons et/ou de la paroi latérale.

9. Membrane flexible selon l'une quelconque des revendications 5 à 8, dans laquelle la partie d'introduction de deuxième pression pneumatique est conçue pour introduire la deuxième pression pneumatique auxiliaire, de manière à ce qu'elle soit inférieure à la deuxième pression pneumatique principale.

10. Membrane flexible selon l'une quelconque des revendications 1 à 9, dans laquelle la plaque de compression et/ou l'élément de séparation comprend/comprennent un caoutchouc parmi un caoutchouc éthylène-propylène, un caoutchouc néoprène et un caoutchouc nitrile.

11. Appareil de polissage mécano-chimique (CMP) comprenant :
un plateau (660) ayant un tampon (680) conçu pour polir un substrat ; et
un touret (610) à polir disposé sur le plateau, le touret à polir comprenant une membrane flexible (100) conçue pour maintenir et comprimer le substrat sur le tampon à polir et un support (620) conçu pour supporter la membrane flexible ;
**caractérisé en ce que**
la membrane flexible est une membrane flexible selon l'une quelconque des revendications 1 à 10.
